(19) Europäisches Patentamt
European Patent Office
Office européen des brevets

(11) EP 1 379 019 A1

(12) EUROPEAN PATENT APPLICATION

(43) Date of publication:
07.01.2004 Bulletin 2004/02

(51) Int Cl.⁷: $H04B\ 17/00$

(21) Application number: 02291666.2

(22) Date of filing: 03.07.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(71) Applicant: Mitsubishi Electric Information
Technology Centre Europe B.V.
1119 NS Schiphol Rijk (NL)

(72) Inventor: Voyer, Nicolas, Mitsubishi Electric ITE
35700 Rennes (FR)

(74) Representative: Maillet, Alain
Cabinet le Guen & Maillet,
5, Place Newquay,
B.P. 70250
35802 Dinard Cedex (FR)

(54) **Method of simulating effects produced by operating conditions of a radiofrequency channel**

(57) The invention relates to a method of simulating an effect produced by operating conditions of a radiofrequency channel on a signal (TxA) transmitted or received by a transceiver (ER1 or ER2).

The method according to the invention includes a digital processing step for applying changes to a digital signal (TxD) representative of said transmitted or received signal (TxA), which changes are predetermined on the basis of expected operating conditions of said radiofrequency channel.

The invention allows simulation of a communication carried by a radiofrequency channel without requiring the use of a conventional RF-channel simulator.

FIG.1

EP 1 379 019 A1

**Description**

The present invention relates to a method of simulating an effect produced by operating conditions of a radiofrequency channel on a signal transmitted or received by a transceiver.

Such methods are currently used for optimizing a telecommunication system before its actual physical implementation, in order to define a system able to provide optimal quality of service. Commonly known telecommunication systems usually include a great number of transceivers intended to communicate through radiofrequency channels. Each channel possesses physical properties, which, combined with interactions with other channels and the fact that the ends of said channel may move with respect to time if the transceivers it links together are mobile, will produce effects which will most of the time adversely affect the quality of the communication carried on said channel. These effects must be quantified and studied in order to allow designers of the telecommunication system to define a configuration of said system in which the adverse impact of said effects are minimized so that the highest possible communication quality may be offered to end users of the telecommunication system.

In currently used simulation methods, a signal which is transmitted by or to the transceiver is picked up by an antenna and fed to an RF-channel simulator, which is a device including a closed envelope in which the operating conditions of the radiofrequency channel are physically reproduced. The signal representative of the signal carried through the radiofrequency channel is then exposed within said envelope to attenuation effects, Doppler effects, multipath effects, and other physical effects which may adversely affect said signal. The RF-channel simulator thus outputs a downgraded signal which possesses physical attributes corresponding to those of the signal as it will actually come out of the radiofrequency channel.

RF-channel simulators are bulky and expensive devices, a single simulator representing a volume of roughly $0,25$ m$^3$ and costing several millions of Euros. It is thus not possible to use RF-channels simulators for performing a realistic simulation of a whole telecommunication system, in which hundreds of thousands of communication channels have to be simultaneously simulated at any given point in time. This means that in current simulation methods, only a tiny fraction of these channels are actually simulated, the behaviour of all other channels being extrapolated on the basis of the results of the simulation of these few selected simulated channels. Consequently, the results of these current simulation methods are incomplete and do not accurately depict the quality of the ongoing communications in the whole telecommunication system, which in turn may lead to a wrong definition of said system and to the deployment of a system which will not yield an optimal quality of service to its end users.

The present invention aims at solving the above-mentioned problems, by providing a method of simulating operating conditions of a telecommunication system, which allows simulation of a communication carried by a radiofrequency channel without requiring the use of a conventional RF-channel simulator.

To this end, according to a software-oriented aspect of the invention, a method as described in the opening paragraph includes a digital processing step for applying changes to a digital signal representative of said transmitted or received signal, which changes are predetermined on the basis of expected operating conditions of said radiofrequency channel.

In the method according to the invention, the signal to be transmitted or received by the transceiver is no longer submitted to actual physical effects as happens in the RF-channel simulator, where said effects have to be recreated, which is the cause of the bulk and high cost of this device. Instead, a digital representation of said signal is used, which can then easily be subjected to a digital processing reproducing said effects, the nature of this digital processing being programmable and thus tunable in a far more flexible manner than is the case in the known simulation methods.

According to a first software-oriented variant of the invention, the above-described method further includes a frequency conversion step for shifting the frequency of the signal intended to be transmitted or received by the transceiver.

This first software-oriented variant allows to downshift the frequency of said signal from an RF-frequency which is typically of the order of the GigaHertz to a lower frequency allowing said signal to be more easily sampled and processed.

According to a second software-oriented variant of the invention, the above-described method further includes an analog-to-digital conversion step for converting into said digital signal an analog signal intended to be transmitted or received by said transceiver.

In this second software-oriented variant of the invention, the signal to be transmitted or received is picked up in its analog form, for example from a transmitting antenna or from an output of an RF part which generates said signal before it actually reaches such an antenna, and is converted into the digital signal to which the digital processing step is to be applied according to the invention.

According to a third software-oriented variant of the invention, which constitutes an alternative to the second variant, said digital signal is derived from a signal delivered to or by a baseband unit included in said transceiver.

In this third software-oriented variant of the invention, the digital signal to which the digital processing step is to be applied according to the invention is delivered in its digital form by the baseband unit, before being converted into analog as is done in all current transceivers. This allows to dispense with analog-to-digital and digital-to-analog conversion steps which may introduce unwanted noise in the digital signal to be processed.

According to a specific software-oriented embodiment of the invention, the digital processing step includes a digital filtering sub-step, which is defined by means of a set of complex parameters computed on the basis of data provided by at least one behavioural model of the radio frequency channel.

According to a preferred software-oriented embodiment of the invention, said set of complex parameters is computed on the basis of data provided by a coupling loss model, a fast fading model and a delay spread distribution model, which models are intended to cooperate in order to depict operating conditions of the radiofrequency channel.

According to one of its hardware-oriented aspects, the invention also relates to a simulation device for simulating an effect produced by operating conditions of a radiofrequency channel on a signal transmitted or received by a transceiver, said device including digital processing means for applying changes to a digital signal representative of said transmitted or received signal, which changes are predetermined on the basis of expected operating conditions of said radiofrequency channel.

According to a first hardware-oriented variant of the invention, the above-described simulation device further includes frequency conversion means for shifting the frequency of the signal intended to be transmitted or received by the transceiver.

According to a second hardware-oriented variant of the invention, the above-described simulation device further includes analog-to-digital conversion means for converting into said digital signal an analog signal intended to be transmitted or received by said transceiver.

According to a third hardware-oriented variant of the invention, which constitutes an alternative to the second variant, a simulation device as described above further includes means for deriving said digital signal from a signal delivered to or by a baseband unit included in said transceiver.

According to a specific hardware-oriented embodiment of the invention, said digital processing means include a digital filter intended to be configured by means of a set of complex parameters computed by at least one behavioural module on the basis of data provided by at least one model of the radio frequency channel.

According to a preferred hardware-oriented embodiment of the invention, said set of complex parameters is to be computed by means of a coupling loss module, a fast fading module and a delay spread distribution module, which modules are intended to cooperate in order to depict operating conditions of the radiofrequency channel.

The operating conditions of the radiofrequency channel will advantageously be defined by contents of a control signal which is to be provided to the digital processing means by a user of said simulation device.

The digital processing means will thus be driven by a signal which can easily be modified by a user of the simulation device, which confers greater flexibility of use to said device. The control signal may, for example, consist in a digital control word, and thus be programmable by software means external to the simulation device.

As an implement intended for one of its variants, the invention also relates to a transceiver including a baseband unit for processing signals intended to be transmitted or received by said transceiver, which further includes at least one baseband terminal connected to said baseband unit, which baseband terminal is intended to deliver or receive a digital signal to or from a simulation device as described above.

As a product directly obtained by its use, the invention also relates to a signal resulting from a processing step or generated by digital processing means included in any one aspect or variant of the invention described above.

As one of its by-products, the invention further relates to data storage means for storing such a signal.

The characteristics of the invention mentioned above, as well as others, will emerge more clearly from a reading of the following description given in relation to the accompanying figures, amongst which:

Fig.1 is a functionnal diagram which depicts a simulation device using a simulation method according to a variant of the invention for simulating effects produced by a radiofrequency channel on a transmitted signal,

Fig.2 is a functionnal diagram which depicts a simulation device using a simulation method according to this variant of the invention for simulating effects produced by a radiofrequency channel on a received signal,

Fig.3 is a functionnal diagram which depicts a simulation device using a simulation method according to another variant of the invention for simulating effects produced by a radiofrequency channel on a transmitted signal,

Fig.4 is a functionnal diagram which depicts a simulation device using a simulation method according to this other variant of the invention for simulating effects produced by a radiofrequency channel on a received signal,

Fig.5 is a functionnal diagram which depicts a simulation device using a simulation method according to yet another variant of the invention for simulating effects produced by a radiofrequency channel on a transmitted signal, and.

Fig.6 is a functional diagram of digital processing means included in a simulation device according to a specific embodiment of the invention.

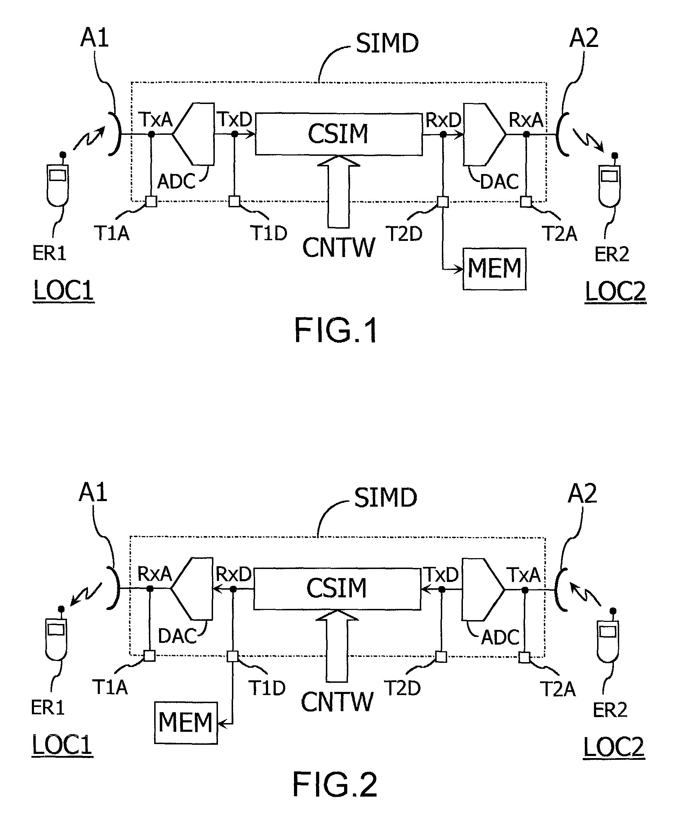

Fig. 1 diagrammatically shows a simulation device SIMD acccording to a variant of the invention, and intended to simulate effects produced by operating conditions of a radiofrequency channel existing between a first and a second transceiver ER1 and ER2, respectively located at a first and at a second location LOC1 and LOC2. The simulation device SIMD according to the invention includes digital processing means CSIM for applying changes, in this example, to a digital signal TxD representative of an analog signal TxA transmitted by the first transceiver ER1 towards the second transceiver ER2. These changes are predetermined by a control word CNTW on the basis of expected operating conditions of said radiofrequency channel.

In this example, the analog signal TxA transmitted by the first transceiver TR1 is picked up by a first antenna A1 and fed to analog-to-digital conversion means ADC, which outputs the digital signal to be processed TxD, a so-called digital received signal RxD resulting from the digital processing carried out by the digital processing means CSIM being converted into an analog received signal RxA by digital-to-analog processing means DAC before being fed via a second antenna A2 to the second transceiver ER2.

Terminals T1A, T1D, T2D and T2A of the simulation device SIMD enable a user of said device to monitor all above-mentioned signals TxA, TxD, RxD and RxA in order to evaluate the adverse effects caused to the transmitted signal by the radiofrequency channel simulated by means of the invention. In particular, data storage means MEM may be used to store the digital signal RxD provided at terminal T2D by the digital processing means CSIM, so that said digital signal RxD may be compared to the digital signal TxD representative of the analog signal TxA originally transmitted by first transceiver ER1, in order to evaluate the impact of the operating conditions of the radiofrequency channel defined between the first and second locations LOC1 and LOC2. This embodiment of the invention particularly enables to assess if transmitting parameters used by the first transmitter ER1, such as signal power, are suitably chosen, a wrong choice being made apparent by a difference between the contents of data transmitted by the first transceiver ER1 and the data actually carried by the received signal RxD.

Fig.2 diagrammatically shows a simulation device SIMD according to a same variant of the invention as described above, and intended to simulate effects produced by the radiofrequency channel described above on a signal intended to be received by the first transceiver ER1. In this example, an analog signal TxA is transmitted by the second transceiver TR2, picked up by the second antenna A2 and fed to analog-to-digital conversion means ADC, which outputs the digital signal to be processed TxD, the digital received signal RxD resulting from the digital processing carried out by the digital processing means CSIM being converted into an analog received signal RxA by digital-to-analog processing means DAC before being fed via the first antenna A1 to the first transceiver ER1.

In this example, the data storage means MEM may be used to store the digital signal RxD provided by the digital processing means CSIM at terminal T1D, so that said digital signal RxD may be compared to the digital signal TxD representative of the analog signal TxA originally transmitted by the second transceiver ER2, in order to evaluate the impact of the operating conditions of the radiofrequency channel defined between second and first locations LOC2 and LOC1. This embodiment of the invention also enables to assess if receiving parameters used by the first transmitter ER1 are suitably chosen, a wrong choice being made apparent by a difference between the contents of data transmitted by second transceiver ER2 and the data actually displayed to an end user of the first transceiver BR1.

The analog-to-digital conversion means ADC included in the simulation device SIMD may include front-end filters intended to cancel electromagnetic noise affecting the signals picked up by the antennae A1 or A2. Such front-end filters may introduce electronic noise into the digital signal TxD, which will advantageously be suppressed later by the digital processing means CSIM.

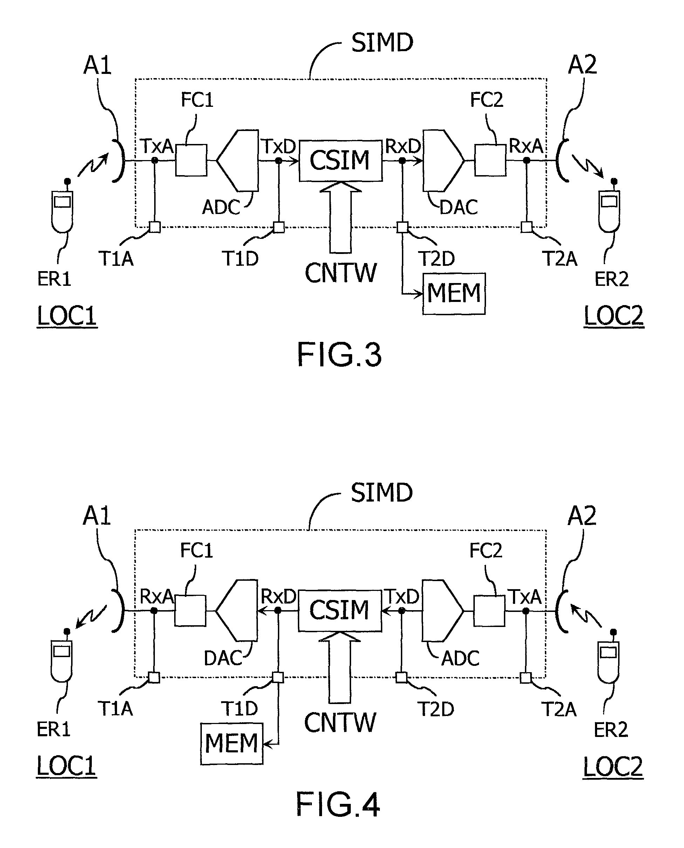

Fig.3 diagrammatically shows a simulation device SIMD according to another variant of the invention, intended for the same purposes as those of the simulation device shown in Fig. 1. This simulation device SIMD further includes first and second frequency conversion means FC1 and FC2 for respectively downshifting and upshifting the frequencies of the analog signals TxA and RxA, which are typically of the order of the GigaHertz. The frequency downshifting performed by the first frequency conversion means FC1 enables to simplify sampling operations carried out by the analog-to-digital conversion means ADC on the analog transmitted signal TxA according to techniques well-known to those skilled in the art, and lessens timing constraints imposed on the processing operations carried out by the digital processing means CSIM on the digital signal TxD.

Fig.4 diagrammatically shows a simulation device SIMD according to this other variant of the invention, intended for the same purposes as those of the simulation device shown in Fig.2, wherein the second and first frequency conversion means FC2 and FC1 are respectively intended for downshifting and upshifting the frequencies of the analog signals TxA and RxA, thus providing the same advantages as those described above.

It should be noted here that such frequency conversions, since being usually performed by mixing the incoming signal, whose frequency must be up or downshifted, with a reference oscillating signal, will introduce imperfections in the analog signal TxA. Such imperfections will be converted into digital and may thus later be compensated by the digital processing means CSIM.

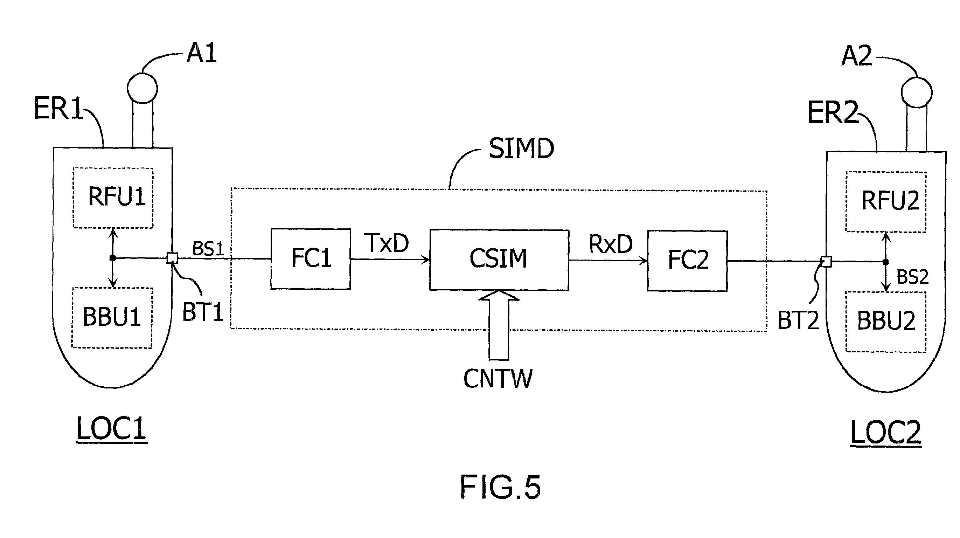

Fig.5 diagrammatically shows a simulation device SIMD according to yet other variant of the invention, intended for the same purposes as those of the simulation device shown in Figs. 1 and 3. According too this variant, at least one of the first and second transceivers ER1 or ER2, and in this case each of them, includes a baseband unit BBU1, BBU2 for processing signals intended to be transmitted or received by said transceiver ER1 or ER2, which further includes at least one baseband terminal BT1 or BT2 connected to said baseband unit BBU1 or BBU2, which baseband terminal BT1 or BT2 is intended to deliver or receive a digital signal BBS1, BBS2 to or from a simulation device SIMD as described above. Each transceiver ER1 and ER2 includes in this example an RF unit RFU1 and RFU2, intended to receive or deliver said baseband digital signals BBS1 or BBS2, and to perform a frequency up-shift or a frequency down-shift, respectively, before or after transmitting or receiving said signals via first and second antennae A1 or A2.

According to this variant of the invention, the digital signal TxD to which the digital processing is to be applied by the digital processing means CSIM is delivered in its digital form by the baseband unit BBU1, without having to be converted into analog as is done in all current transceivers. This allows to dispense with analog-to-digital and digital-to-analog conversion steps in the simulation method, which conversion steps might introduce unwanted noise in the digital signal TxD to be processed.

In this particular embodiment, first and second frequency converters FC1 and FC2 are provided, in order to accurately simulate in a digital manner the noise that the RF units RFU1 and RFU2 would add to the baseband signals BBS1 and BBS2, according to frequency conversion imperfection models well known to those skilled in the art

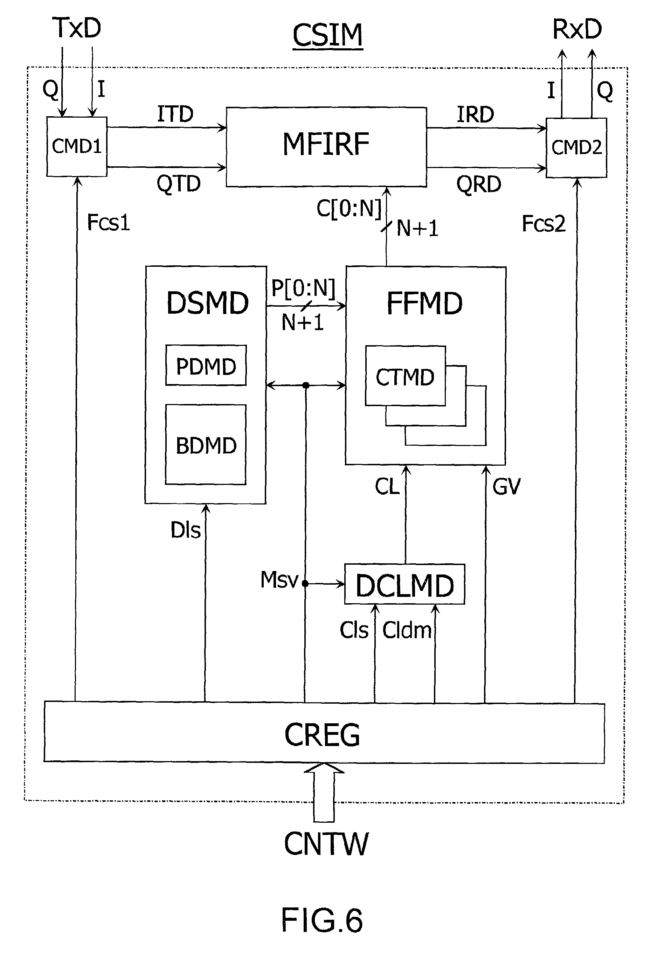

Fig.6 diagrammatically shows an advantageous embodiment of the digital processing means CSIM included in a simulation device according to a specific embodiment of the invention. In this embodiment, the digital processing means CSIM are intended to receive an input signal TxD, consisting of two components ITD and QTD components featuring a 90° phase-shift with respect to each other, and to deliver an output signal RxD, consisting of two components IRD and QRD components featuring a 90° phase-shift with respect to each other. The separation of a given signal into two I and Q components is well-kown to those skilled in the art as phase-quadrature modulation technique.

The digital processing means CSIM will advantageously include at least one compensation module CMD1 intended to receive the input signal TxD and to filter out of said input signal TxD all imperfections which may have been introduced therein by previous filterings, analog-to-digital and frequency conversions. The compensation module CMD1 may include a digital filter, tunable by means of a filtering control signal Fcs1 predetermined by a part of the contents of a control word CNTW stored in a control register CREG.

In the embodiment of the invention described here, a second compensation module CMD2, tunable by means of a second filtering control signal Fcs2, is provided, which enables reverse use of the digital processing means CSIM.

The digital processing means CSIM include in this embodiment a multipath finite impulse response filter MFIRF, which is intended to respectively receive and provide said input and output signals TxD and RxD. This filter will perform a digital processing on said input signal TxD, the nature of which processing is defined by a set C[0:N] of N+1 complex parameters predetermined by the control word CNTW. This set of parameters C[0:N] is actually a vector which will advantageously be modified with respect to time in order to reflect the instability of the simulated radiofrequency channel in a mobile environment. Since the output and input signals RxD and TxD of the filter MFIRF are digital signals, an equation defining the relationship between said signals can be written as :

$$RxD(T_k) = \sum_{i=\dot{a}}^{N+1} C_i.TxD(T_{k-i})$$

The value of the set of complex parameters C[0:N] will reflect, in this example, the following effects produced by operating conditions of the simulated radiofrequency channel:

.    signal power attenuation as a function of the distance between the various transceivers involved in the simulation, modelled by means of a dynamic coupling loss module DCLMD,

.    fast fading effect, which represents interferences between multiple radio waves arriving at a same time with potentially different phases due to Doppler effects linked to the relative velocities of the various mobile transceivers involved in the simulation, and is modelled by means of a fast fading module FFMD, which makes use of a channel tap model CTMD,

.    shadowing effects, known as long-term fading, which represent the impact of street corner effects, bridges, etc. on local radio wave propagation, define a time-dependent, multipath environment, and are modelled by means of a delay spread distribution module DSMD.

A coupling loss parameter CL represents an average global attenuation of the radiofrequency channel. It varies in time according to mobility of the transceivers over more than two hundred wavelengths of the signals exchanged between said transceivers. The coupling loss parameter CL will thus be computed by the dynamic coupling loss module DCLMD on the basis of a constant predetermined value Cls and a predetermined coupling loss dynamic modification value Cldm to be taken into acount at a refreshing rate depending on the value of a predetermined mobile transceiver velocity Msv. The predetermined values Cls and Cldm may for example have previously been deduced by a user of the simulation device from a study of radioplanning maps which give, for each location, predictions of coupling losses between various transceivers, on the basis of Maxwell equations.

A radiofrequency channel is said to be frequency-selective when its impulse response contains more than one non-zero element. This characterizes a multipath environment, in which multiple paths of a same radio wave arrive at an antenna with significantly different times of arrival. When averaging fast fading effects, contributions of different delay taps may be described in the form of a delay spread vector P[0:N], which vector represents an averaged real value, for a mobility of roughly twenty wavelengths, of the power contribution of the delay tap compared to the total power at the output of the channel. The delay spread vector P[0:N] thus characterises the delay spread and fulfills the condition :

$$\sum_{i=0}^{N} P_i = 1$$

In this embodiment of the invention, the delay spread vector P[0:N] will be automatically generated by the delay spread distribution module DSMD. The delay spread P[0:N] will be subjected to time-dependent variations defined by a path bird/death model BDMD and a path drift model PDMD.

The delay spread vector P[0:N] may change very abruptly, because of typical street corner effects, where an optical path is suddenly broken or opened due to appearance of disappearance of a physical obstacle. Such phenomena, known as birth/death occurences, do not happen very often, but when they do, they produce an effect which is immediate. A birth/death occurance is modelled by the path birth/death model BDMD by a sudden modification of the delay spread vector P[0:N], jointly with a sudden change of the coupling loss. However, the delay spread vector P[0:N] will not be changed in its whole, since a birth/death occurence affects only some of the simulated ongoing communications at a given point in time.

Non-zero components of the delay spread vector P[0:N] may switch positions over time, thus reflecting a drifting in time of the time of arrival of related radio waves. The drift of a path is typically a slow phenomenon, which depends on the evolution of the length of said propagation path with respect to time. A drift of more than one sample duration, i.e. a permutation of one row of the delay spread vector P[0:N] with a consecutive row, takes at least the following duration :

$$T_{drift} = \frac{C}{V} T_{sample}$$

Where C is the light speed ($3.10^8$m/s), V is a vehicular speed of a given mobile transceiver, and $T_{sample}$ a duration between two consecutive samples. With V=120 km.h$^{-1}$, and oversampling of 2, this results in a drift every 1,2s. Because a path may come from any direction, each path will feature its own drift speed, depending on the value of a random variabe $\theta$, uniformly chosen over [$-\pi$ ;$\pi$].

The path drift model PDMD enables to depict such drifts, by using signal samples $N_{samples}$ defined as (C/V). cos($\theta$). After a number of consecutive signal samples, the time-related position of a path shall drift by one index in the delay spread vector P[0:N]. The direction of the timing drift will be given by the sign of sin($\theta$). When a path drifts towards the right, respectively towards the left, this is depicted by the following equations :

If i<N-1 {

$P_{i+1}=P_{i+1}+P_i$

$\theta$ is redrawn for this tap}

else

$\theta$ is redrawn for this tap

If i>1 {

$P_{i-1}=P_{i-1}+P_i$

$\theta$ is redrawn for this tap}

else

$\theta$ is redrawn for this tap

The delay spread vector P[0:N] has components $P_i$ which are averaged values. Each average value $P_i$ will be transformed into an instantaneous value $C_i$ of a component of the set of complex parameters C[0:N] through the use of a channel tap model CTMD, which model then performs a modulation of said average value $P_i$.

The set of complex parameters C[0 :N] which is generated by the fast fading module FFDM in order to ensure a proper configuration of the multipath finite impulse response filter MFIRF shall reflect the various effects mentioned above. The value of the coupling loss parameter CL and the contents of the delay spread vector P[0:N] should thus be regularly refreshed, for example with updates every 20ms. Within such a window of stability of long-term evolution of the radiofrequency channel, each parameter Ci will be derived from the above parameters according to a fast fading model, based on the well-known Jakes model, which can be implemented as follows :

A complex Gaussian random variable GV can be used for selecting an independent channel realisation every x seconds. The value x is selected according to the mobile transceiver velocity Msv. In order to fit statistics of such channel realisation with a Doppler distribution, the Gaussian variable GV is passed through an IIR filter which contains a typical Doppler curve. An interpolation technique may then also be applied in order to shape the channel response between successive independent observations. To this purpose, a so-called sinc interpolation technique may be used, which yields a smooth interpolation, while being computationally complex, which is why a further linear interpolation technique may be used in order to fit with the signal sampling rate.

The above-described cooperation between the dynamic coupling loss module DCMD, the fast fading module FFMD and the delay spread distribution module DSMD thus enables the digital processing means CSIM to apply changes to the digital signal TxD which will depict those that the operating conditions of a real radiofrequency channel would cause to a radio signal transmitted through said channel. The digital processing means involved in the above-mentioned embodiments of the invention can be implemented by way of a digital signal processor, so that the simulation device according to the invention will essentially consist in a printed circuit board carrying such a processor and some peripheral circuits, and thus be cheaper and less bulky than currently used RF-channel simulators.

**Claims**

1. A method of simulating an effect produced by operating conditions of a radiofrequency channel on a signal transmitted or received by a transceiver, said method including a digital processing step for applying changes to a digital signal representative of said transmitted or received signal, which changes are predetermined on the basis of expected operating conditions of said radiofrequency channel.

2. A method as claimed in claim 1, further including a frequency conversion step for shifting the frequency of the signal intended to be transmitted or received by the transceiver.

3. A method as claimed in claims 1 or 2, further including an analog-to-digital conversion step for converting into said digital signal an analog signal intended to be transmitted or received by said transceiver.

4. A method as claimed in claims 1 or 2, in which said digital signal is derived from a signal delivered to or by a baseband unit included in said transceiver.

5. A method as claimed in claims 1 to 4, in which said digital processing step includes a digital filtering sub-step, which is defined by means of a set of complex parameters computed on the basis of data provided by at least one behavioural model of the radio frequency channel.

6. A method as claimed in claim 5, in which said set of complex parameters is computed on the basis of data provided by a coupling loss model, a fast fading model and a delay spread distribution model, which models are intended to cooperate in order to depict operating conditions of the radiofrequency channel.

7. A signal resulting from a processing step included in a method as claimed in claims 1 to 6.

8. A simulation device for simulating an effect produced by operating conditions of a radiofrequency channel on a signal transmitted or received by a transceiver, said device including digital processing means for applying changes to a digital signal representative of said transmitted or received signal, which changes are predetermined on the basis of expected operating conditions of said radiofrequency channel.

9. A simulation device as claimed in claim 8, further including frequency conversion means for shifting the frequency of the signal intended to be transmitted or received by the transceiver.

10. A simulation device as claimed in claims 8 or 9, further including analog-to-digital conversion means for converting into said digital signal an analog signal intended to be transmitted or received by said transceiver.

11. A simulation device as claimed in claims 8 or 9, further including means for deriving said digital signal from a signal delivered to or by a baseband unit included in said transceiver.

12. A simulation device as claimed in claims 8 to 11, in which said digital processing means include a digital filter intended to be configured by means of a set of complex parameters computed by at least one behavioural module on the basis of data provided by at least one model of the radio frequency channel.

13. A simulation device as claimed in claim 12, in which said set of complex parameters is to be computed by means of a coupling loss module, a fast fading module and a delay spread distribution module, which modules are intended to cooperate in order to depict operating conditions of the radiofrequency channel.

14. A simulation device as claimed in claims 8 to 13, in which the operating conditions of the radiofrequency channel are to be defined by contents of a control signal which is to be provided to the digital processing means by a user of said simulation device.

15. A transceiver including a baseband unit for processing signals intended to be transmitted or received by said transceiver, which further includes at least one baseband terminal connected to said baseband unit, which baseband terminal is intended to deliver or receive a digital signal to or from a simulation device as claimed in claims 8 to 14.

16. A signal generated by digital processing means included in a simulation device as claimed in claims 8 to 14.

17. Information storage means for storing a signal as claimed in claims 7 or 16.

FIG.1

FIG.2

FIG.3

FIG.4

FIG.5

EP 1 379 019 A1

FIG.6

# EP 1 379 019 A1

| | **European Patent Office** | **EUROPEAN SEARCH REPORT** | **Application Number** EP 02 29 1666 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | MASTRANGELO J F ET AL: "A NEW WIDEBAND HIGH FREQUENCY CHANNEL SIMULATION SYSTEM" IEEE TRANSACTIONS ON COMMUNICATIONS, IEEE INC. NEW YORK, US, vol. 45, no. 1, 1997, pages 26-33, XP000642234 ISSN: 0090-6778 * chapter II, sections A-C * * page 30, right-hand column, paragraph 2 - paragraph 4; figure 4 * * page 32, left-hand column, line 19 - line 35 * | 1-17 | H04B17/00 |
| X | ZUMKELLER M ET AL: "TESTSTRECKE AUF DEM SIMULATOR" FUNKSCHAU, FRANZIS-VERLAG K.G. MUNCHEN, DE, vol. 63, no. 13, 14 June 1991 (1991-06-14), pages 68-70,72, XP000310640 ISSN: 0016-2841 * page 68, right-hand column, line 21 - page 69, line 26 * * page 69, last paragraph - page 70, line 32 * | 1-17 | |
| X | US 6 058 261 A (RAPELI JUHA H A) 2 May 2000 (2000-05-02) | 1-3, 5-10,12, 13,16,17 | **TECHNICAL FIELDS SEARCHED (Int.Cl.7)** H04B H04Q |
| A | | 4,11,14, 15 | |
| | * column 1, line 31 - line 59 * * column 2, line 12 - line 22 * * column 4, line 29 - line 54 * * column 4, line 64 - column 5, line 2 * * column 6, line 16 - column 7, line 8; figure 5 * * column 8, line 14 - line 30; figure 7 * | | |
| | -/-- | | |

The present search report has been drawn up for all claims

| Place of search | Date of completion of the search | Examiner |
|---|---|---|
| THE HAGUE | 13 December 2002 | Sieben, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

**European Patent Office**

**EUROPEAN SEARCH REPORT**

Application Number

EP 02 29 1666

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | ENGSTROEM B ET AL: "A STORED MOBILE RADIO CHANNEL SIMULATOR AND SOUNDER" PROCEEDINGS OF THE NORDIC SEMINAR ON DIGITAL MOBILE RADIO COMMUNICATIONS. HELSINKI, DEC. 1 - 3, 1992, HELSINKI, TELECOM FINLAND, FI, vol. SEMINAR 5, 1 December 1992 (1992-12-01), pages 373-379, XP000458677 | 1-3, 5-10, 12-14, 16,17 | |
| A | * page 373, right-hand column, paragraph 2 - paragraph 3 * <br> * page 374, right-hand column, line 27 - page 375, left-hand column, line 2; figures 3,6 * <br> ----- | 4,11,15 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 13 December 2002 | Sieben, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 02 29 1666

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2002

| Patent document cited in search report | | Publication date | Patent family member(s) | Publication date |
|---|---|---|---|---|
| US 6058261 | A | 02-05-2000 | FI  934814 A | 26-05-1995 |
| | | | DE  4438650 A1 | 24-05-1995 |
| | | | GB  2283392 A ,B | 03-05-1995 |